# EUROPÄISCHE PATENTSCHRIFT

(11) **EP 3 403 056 B1**
(45) Veröffentlichungstag und Bekanntmachung des Hinweises auf die Patenterteilung: **16.06.2021**
(21) Anmeldenummer: 16801434.8
(22) Anmeldetag: 23.11.2016
(51) Int. Cl.: G01D 11/24, H02K 11/01, H02K 11/215

(54) **ANORDNUNG EINES DREHWINKELMESSSYSTEMS AN EINEM GEHÄUSE**
ASSEMBLING OF A ROTATION DETECTION SYSTEM TO A HOUSING
ASSEMBLAGE D'UN DÉTECTEUR DE ROTATION À UN BOÎTIER

(30) Priorität: 13.01.2016 DE 102016100499
(43) Veröffentlichungstag der Anmeldung: 21.11.2018
(73) Patentinhaber: Fraba B.V., 6416 SG Heerlen (NL)
(72) Erfinder: FORTHAUS, Martin, 50829 Köln (DE); LÖKEN, Michael, 52428 Jülich (DE)
(74) Vertreter: terpatent Patentanwälte ter Smitten Eberlein-Van Hoof Rütten Daubert
(86) Internationale Anmeldenummer: PCT/EP2016/078558
(87) Internationale Veröffentlichungsnummer: WO 2017/121525

(56) Entgegenhaltungen:
- EP-A1- 1 134 540
- WO-A1-2009/015496
- WO-A1-2013/084270
- DE-A1-102009 004 780
- JP-A- 2007 082 297
- US-A1- 2010 302 736

## Beschreibung

Die Erfindung betrifft eine Anordnung eines Magnet-basierten Drehwinkelmesssystems an einem Antriebsmotor-Gehäuseteil, mit einem Antriebsmotor-Gehäuseteil, einer mit einem freien Ende aus dem Antriebsmotor-Gehäuseteil heraus geführten Antriebswelle, einer mit der Antriebswelle an dem freien Ende der Antriebswelle drehfest verbundenen Erregereinheit, und einer feststehenden Sensoreinheit, die zum Erfassen einer Drehbewegung der Antriebswelle mit der Erregereinheit funktional zusammenwirkt.

Derartige Drehwinkelmesssysteme dienen zur Erfassung von Drehbewegungen einer Welle und werden vielfach auch als Winkelmesseinrichtung, Drehwinkelsensor oder Drehgeber bezeichnet. Solche Systeme werden insbesondere zur Steuerung und Überwachung von Elektro-Motoren, insbesondere Servomotoren, in Maschinen, Anlagen oder Fahrzeugen eingesetzt. Eine besondere Rolle spielen dabei kontaktfreie Drehwinkelmesssysteme, beispielsweise optische oder magnetisch-erregte Systeme, da diese aufgrund der verschleissfreien Sensorik eine lange Lebensdauer haben. Diese Messsysteme sind zumeist an dem der Abtriebsseite gegenüberliegenden axialen Ende der Antriebswelle angeordnet, welches auch als B-Seite bezeichnet wird. Das Antriebsmotor-Gehäuseteil, oder auch 'Motorflansch' genannt, ist insbesondere als ein Gehäuse ausgebildet sein, das einen elektrischen Antriebsmotor zum Antreiben der Antriebswelle umgibt. Beispiele für Drehwinkelmesssysteme finden sich beispielsweise in den Druckschriften JP 2007 082297 A, US 2010/302736 A1 und WO 2013/084270 A1. Hieraus sind insbesondere Abschirmkörper bekannt, die die Sensoreinheit gegenüber einem elektromagnetischen Feld von außen schützen sollen, wobei der Abschirmkörper der JP 2007 082297 A axial zwischen der Sensoreinheit und dem Antriebsmotor-Gehäuseteil angeordnet ist.

Bei Magnet-basierten Drehwinkelmesssystemen, insbesondere magnetisch induzierten bzw. magnetisch erregten Systemen, wie magnetische Singleturn- bzw. Multiturn- Absolutwertgeber, wird die Umdrehung einer Welle mittels der Messeinheit rein magnetisch oder magnetisch-optisch erfasst. Bei den rein magnetischen Systemen, oder auch vollmagnetischen Systemen genannt, umfasst die Messeinheit insbesondere eine rotierende Erregereinheit, wie einen Permanentmagneten, und eine feststehende Sensoreinheit. Die Sensoreinheit umfasst einen Sensorträger und zumindest einen auf dem Sensorträger angeordneten Erfassungssensor, wie beispielsweise einen Hallsensor zur sogenannten single-turn-Erfassung und/oder einen Wiegand-Sensor zur sogenannten multi-turn-Erfassung. Die Erregereinheit kann separat ausgebildet und mittels einer Befestigungseinrichtung an der Antriebswelle befestigt sein. Dadurch kann die Erregereinheit in relativ einfacher Weise an dem freien Ende der Antriebwelle montiert werden. Alternativ kann die Erregereinheit als ein Bestandteil der Antriebswelle ausgebildet sein, so dass ein zusätzliches Bauteil nicht erforderlich ist. Bei den magnetisch-optischen Systemen kann zusätzlich ein an sich bekanntes optisches Codescheiben-Messsystem zur optischen Erfassung der Drehwinkelposition vorgesehen sein.

Im Betrieb eines solchen Magnet-basierten Drehwinkelmesssystems an einer Antriebswelle, insbesondere an einer Antriebswelle eines Elektromotors bzw. Elektrogenerators, können jedoch geringe, insbesondere nicht quantifizierte, Messfehler auftreten. Solche Messfehler sind zumeist durch von außen auf das Drehwinkelmesssystem einwirkende Störgrößen verursacht. Eine solche Störgröße ist beispielsweise ein Magnetfeld, das dadurch hervorgerufen ist, dass die Antriebswelle im Betrieb von dem Elektromotor oder von einer elektromagnetischen Bremse magnetisiert wird, und das Magnetfeld durch die typischerweise aus Stahl hergestellte Antriebswelle weitergeleitet wird, und schließlich an dem Drehwinkelmesssystem das durch die Erregereinheit gebildete rotatorische Magnetfeld verändert, so dass in der Sensoreinheit Messungenauigkeiten bzw. Messfehler verursacht werden. Zur Verbesserung der Messgenauigkeit ist daher eine Vermeidung solcher Störungen in dem Drehwinkelmesssystem erforderlich. Dies kann beispielsweise durch eine Abschirmung erfolgen.

Neben der zuvor erläuterten Problematik magnetischer Störeinflüsse ergeben sich auch aus konstruktionstechnischer Hinsicht Schwierigkeiten bei einer exakten und dauerhaften Ausrichtung des Magnet-basierten Drehwinkelmesssystems. Insbesondere die Ausrichtung und Justierung der einzelnen Komponenten des Drehwinkelmesssystems kann problematisch sein, da bereits kleinste Fertigungsungenauigkeiten oder Toleranzüberschreitungen zu Abweichungen und Fehlern in den Messergebnissen führen können. Beispielsweise liegen die typischen Konzentrizitätsanforderungen bei optischen oder magnetischen Sensoren in einem Bereich von 0,01mm. Als Folge hieraus ist es erforderlich, dass die einzelnen Bauteile, wie Sensoreinheit, Erregereinheit, Abschirmkörper oder andere Zwischenbauteile, besonders exakt gefertigt, manuell montiert, zueinander ausgerichtet und justiert werden. Dadurch ist jedoch die Herstellung und Montage solcher Drehwinkelmesssysteme relativ aufwendig und dadurch kostenintensiv.

Der Erfindung liegt daher die Aufgabe zugrunde, eine Anordnung eines Magnet-basierten Drehwinkelmesssystems an einem Antriebsmotor-Gehäuseteil bereitzustellen, die eine exakte und störungsfreie Messung und eine besonders einfache und kostengünstige Herstellung und Montage ermöglicht.

Die Lösung der Aufgabe erfolgt erfindungsgemäß durch eine Anordnung mit den Merkmalen des Anspruchs 1.

Erfindungsgemäß ist axial zwischen der Sensoreinheit und dem Antriebsmotor-Gehäuseteil ein Abschirmkörper, insbesondere ein magnetischer Abschirmkörper, angeordnet, wobei Mittel zur direkten Ausrichtung der Sensoreinheit gegenüber dem Antriebsmotor-Gehäuseteil vorgesehen sind. Dadurch kann sowohl eine Abschirmung als auch eine unkomplizierte, exakte, kostengünstige und dauerhafte Lageausrichtung der Sensoreinheit erzielt werden. Insbesondere kann die Sensoreinheit durch die Mittel direkt an dem Gehäuse des Antriebsmotors, insbesondere bezüglich der Antriebswelle, ausgerichtet sein. Der Begriff "direkt" bedeutet in diesem Zusammenhang, dass die Ausrichtung der Sensoreinheit gegenüber dem Antriebsmotor-Gehäuseteil unmittelbar, und zwar ausschließlich zwischen diesen beiden zuvor genannten Bauteilen erfolgen kann. Insbesondere sind zur Ausrichtung keine weiteren Bauteile oder Komponenten vorgesehen bzw. zwischen der Sensoreinheit und dem Antriebsmotor-Gehäuseteil angeordnet. Dadurch kann das Toleranzmaß bei der Ausrichtung auf lediglich diese beiden Bauteile reduziert werden und eine Summierung von Toleranzen, wie es bei einem stapelweisen Aufbau vorkommt, vermieden werden. Ferner können Maßtoleranzen zwischen der feststehenden Sensoreinheit, den rotierenden Bauteilen und dem Gehäuseteil besonders einfach und exakt eingehalten werden. Dazu können beispielsweise bei der Fertigung des Antriebsmotor-Gehäuseteils sämtliche funktionalen Maßtoleranzen in einer einzigen Aufspannung in einem einzigen Arbeitsvorgang hergestellt werden. Ferner kann durch die Anordnung des Abschirmkörpers zwischen der Sensoreinheit und dem Antriebsmotor-Gehäuseteil eine nahezu vollständige Abschirmung des Drehwinkelmesssystems gegenüber magnetischen Störgrößen des Antriebsmotors gewährleistet werden, so dass die Messgenauigkeit deutlich erhöht werden kann. Dazu ist der Abschirmkörper axial zwischen der Sensoreinheit und dem Antriebsmotor-Gehäuseteil angeordnet. Zwischen dem Abschirmkörper und der Sensoreinheit können - beispielsweise in der Reihenfolge - die Mittel und die Erregereinheit angeordnet sein. Der Abschirmkörper ist vorteilhafterweise an die Geometrie des Antriebsmotor-Gehäuseteils und/oder der Sensoreinheit, insbesondere des Sensorträgers, angepasst. Das Antriebsmotor-Gehäuseteil kann einen Teil eines gesamten Motor-Gehäuses darstellen und ist insbesondere als ein Hauptteil des Motor-Gehäuses ausgebildet. Erfindungsgemäß weist der Abschirmkörper zumindest eine Ausnehmung auf, durch die sich die Mittel in axialer Richtung erstrecken. Beispielsweise weist der Abschirmkörper an einem radialen Umfangsbereich eine in Umfangsrichtung ausgebildete Ausnehmung bzw. Aussparung auf, durch die sich -in axialer Richtung - ein beispielsweise als Steg oder Vorsprung ausgebildetes Mittel erstrecken kann. Alternativ oder zusätzlich kann die Ausnehmung eine Bohrung sein, durch die sich ein als Stift ausgebildetes Mittel erstreckt. Besonders bevorzugt ist die Ausnehmung derart ausgebildet, dass sich das Mittel berührungsfrei durch die Ausnehmung erstrecken kann. Dadurch kann die Ausrichtung der Sensoreinheit gegenüber dem Antriebsmotor-Gehäuse direkt und allein gegenüber dem Antriebsmotor-Gehäuseteil, das heißt unabhängig von dem Abschirmkörper, erfolgen. Beispielsweise weist die als eine Bohrung ausgebildete Ausnehmung einen größeren Durchmesser auf als ein sich durch diese erstreckender Zentrierstift. Vorteilhafterweise weist der Abschirmkörper für jedes Zentriermittel bzw. jeden Zentrierstift eine separate Ausnehmung auf.

Die Mittel können grundsätzlich mehrere zueinander korrespondierende Teile umfassen, beispielsweise einen Stift und eine den Stift aufnehmende Aussparung. Die Mittel können individuell gestaltet und beispielsweise als separate Bauteile ausgebildet sein. Vorzugsweise sind die Mittel an der Sensoreinheit, an dem Antriebsmotor-Gehäuseteil und/oder an dem Abschirmkörper ausgebildet. Dadurch können die Anzahl der Bauteile und somit die Herstellungs- und Montagekosten relativ gering sein. Ferner können dadurch die Sensoreinheit und das Antriebsmotor-Gehäuseteil besonders präzise zueinander ausgerichtet sein.

Vorzugsweise erstrecken sich die Mittel von der Sensoreinheit in das Antriebsmotor-Gehäuseteil. Die Mittel können sich vorteilhafterweise zumindest teilweise durch zumindest eine an dem Abschirmkörper ausgebildete Ausnehmung erstrecken. Dadurch ist eine relativ einfache und unkomplizierte Ausrichtung der Sensoreinheit gegenüber dem Antriebsmotor-Gehäuseteil ermöglicht.

Vorzugsweise weisen die Mittel zur direkten Ausrichtung der Sensoreinheit gegenüber dem Antriebsmotor-Gehäuse zumindest einen Zentrierstift auf. Der Zentrierstift kann separat oder als Bestandteil einer Komponente des Drehwinkelmesssystems ausgebildet sein. Vorzugsweise ist der Zentrierstift als ein Bestandteil des Antriebsmotor-Gehäuseteils ausgebildet, beispielsweise als ein an dem Antriebsmotor-Gehäuseteil axial hervorstehender Vorsprung. Der Zentrierstift muss nicht zwingend rund und stabförmig ausgebildet sein, sondern kann eine beliebige Form aufweisen, beispielsweise rechteckig und/oder konisch zusammenlaufend. Insbesondere kann der Zentrierstift ein an dem Gehäuseteil ausgebildeter und axial hervorstehender Zentriersteg sein. Der Zentrierstift kann sich von dem Antriebsmotor-Gehäuseteil bis in die Sensoreinheit erstrecken, insbesondere in eine an der Sensoreinheit ausgebildete, korrespondierende Aussparung oder einen korrespondierenden, umlaufenden Absatz, an dem der Zentrierstift eingefügt oder anliegen kann. Dadurch kann eine direkte und besonders exakte Ausrichtung der Sensoreinheit gegenüber dem Antriebsmotor-Gehäuseteil erreicht werden und somit eine besonders hohe Messgenauigkeit des Messsystems gewährleistet werden. Es sollte deutlich sein, dass der Zentrierstift auch umgekehrt angeordnet sein kann, nämlich als ein an der Sensoreinheit ausgebildeter Vorsprung, der sich in eine an dem Antriebsmotor-Gehäuseteil ausgebildete Ausnehmung erstreckt. Vorteilhafterweise sind mehrere, bevorzugt drei, Zentrierstifte vorgesehen, die über den Umfang des Gehäuseteils in einem definierten Winkelverhältnis angeordnet sind. Dadurch kann die Sensoreinheit in nur einer einzigen rotatorischen Ausrichtung axial auf das Antriebsmotor-Gehäuseteil aufsetzbar sein. Somit kann eine besonders exakte Ausrichtung der Sensoreinheit und letztlich auch des Abschirmkörpers gegenüber dem Antriebsmotor-Gehäuseteil erzielt werden.

Vorzugsweise weisen die Mittel zumindest einen flächigen, insbesondere scheibenförmigen, Zentrierkörper auf. Der Zentrierkörper kann sich zumindest mit einem Teil von der Sensoreinheit in das Antriebsmotor-Gehäuseteil erstrecken. In diesem Fall können die Mittel zur direkten Ausrichtung der Sensoreinheit gegenüber dem Antriebsmotor-Gehäuseteil separat und unabhängig von zumindest einem Teil der Komponenten des Drehwinkelmesssystems hergestellt und montiert sein. Der flächige Zentrierkörper kann insbesondere ein aus Kunststoff hergestelltes Spritzgieß- bzw. Gussteil sein. Vorzugsweise ist der flächige Zentrierkörper als ein Passteil ausgebildet, der zumindest mit einem Teil in eine korrespondierende Aussparung an einer der Komponenten des Drehwinkelmesssystems eingesetzt werden kann.

Vorzugsweise ist der flächige Zentrierkörper axial zwischen der Sensoreinheit und dem Antriebsmotor-Gehäuseteil angeordnet. Hierbei kann der flächige Zentrierkörper insbesondere axial zwischen der Sensoreinheit und dem Abschirmkörper angeordnet sein. Besonders bevorzugt ist der flächige Zentrierkörper axial zwischen der Erregereinheit und dem Abschirmkörper angeordnet, so dass sich - in axialer Richtung gesehen - eine folgende Anordnung ergeben kann: Antriebsmotor-Gehäuseteil, Abschirmkörper, Zentrierkörper, Erregereinheit und Sensoreinheit. Hierbei kann vorgesehen sein, dass die Erregereinheit einen in Richtung der Antriebswelle axial hervorstehenden Stift, Bolzen oder Vorsprung aufweist, der sich axial sowohl durch eine in dem Abschirmkörper ausgebildete koaxiale Ausnehmung als auch durch eine in dem Zentrierkörper ausgebildete koaxiale Ausnehmung, bis in die Antriebswelle erstreckt. Der Stift der Erregereinheit ist insbesondere nichtmagnetisierbar und kann als axiale Verlängerung der Antriebswelle dienen. Dadurch ist eine besonders einfache und effektive Ausrichtung der Sensoreinheit gegenüber dem Antriebsmotor-Gehäuseteil ermöglicht. Ferner kann der Zentrierkörper relativ unkompliziert in das Drehwinkelmesssystem eingesetzt und integriert werden.

Vorzugsweise ist der flächige Zentrierkörper als eine zu der Antriebswelle koaxiale Ringscheibe ausgebildet, die in Richtung der Sensoreinheit zumindest eine axial hervorstehende erste Erhöhung und/oder in Richtung des Antriebsmotor-Gehäuseteils zumindest eine axial hervorstehende zweite Erhöhung aufweist. Besonders bevorzugt steht die erste Erhöhung auch in Richtung des Abschirmkörpers hervor. Die Ringscheibe muss nicht zwingend rund ausgebildet sein, sondern kann eine beliebige flächige Form aufweisen, die zentrisch eine Öffnung beispielsweise zur durch Durchführung der Antriebswelle oder einer axialen Verlängerung der Welle aufweist, wie zum Beispiel des oben erwähnten Vorsprungs der Erregereinheit. In der Sensoreinheit, dem Abschirmkörper und/oder in dem Antriebsmotor-Gehäuseteil können jeweils korrespondierende Vertiefungen bzw. Ausnehmungen ausgebildet sein, in die die Erhöhungen des Zentrierkörpers vorteilhafterweise exakt und in nur einer rotatorischen Ausrichtung der Komponenten zueinander einsetzbar sind. Dadurch kann der Zentrierkörper gegenüber der Sensoreinheit und dem Antriebsmotor-Gehäuseteil bzw. gegenüber dem Abschirmkörper und dem Antriebsmotor-Gehäuseteil relativ einfach und genau ausgerichtet und befestigt werden. Ferner kann das Drehwinkelmesssystem relativ platzsparend aufgebaut sein und in relativ einfacher Weise montiert werden.

Vorzugsweise ist die Erhöhung als ein Zentrierstift, Zentrierring oder Zentrierblock ausgebildet. Besonders bevorzugt ist die erste Erhöhung als ein Zentrierstift und die zweite Erhöhung als ein Zentrierring oder Zentrierblock ausgebildet. Insbesondere können an dem Zentrierkörper zwei exzentrisch angeordnete Zentrierstifte jeweils als erste Erhöhung und ein koaxial zur Antriebswelle angeordneter Zentrierblock als zweite Erhöhung ausgebildet sein. Der Zentrierblock kann insbesondere als ein massiver oder einseitig, das heißt axial einseitig, offener Hohlkörper an dem Zentrierkörper ausgebildet sein. Alternativ kann ein axial hervorstehender Zentrierring vorgesehen sein. Der flächige Zentrierkörper kann folglich mit den beiden als erste Erhöhung ausgebildeten Zentrierstiften in jeweils eine in dem Abschirmkörper ausgebildete, korrespondierende Ausnehmung eingeschoben werden und mit dem als zweite Erhöhung ausgebildeten Zentrierblock in eine an dem Antriebsmotor-Gehäuseteil ausgebildete, korrespondierende Aussparung eingesetzt werden. Dadurch kann der flächige Zentrierkörper gegenüber dem Abschirmkörper und gegenüber dem Antriebsmotor-Gehäuseteil in besonders einfacher Weise ausgerichtet werden.

Vorzugsweise ist der Abschirmkörper feststehend ausgebildet, das heißt, als ein nicht rotierendes Bauteil. Dadurch kann der Abschirmkörper unabhängig von der Antriebswelle und deren mögliche Drehzahlen ausgelegt und dimensioniert sein. Insbesondere ist der Abschirmkörper im Betrieb keinen Schwingungen oder Vibrationen ausgesetzt. Ein Auswuchten des Abschirmkörpers ist nicht erforderlich. Dadurch kann der Abschirmkörper relativ einfach aufgebaut und somit besonders kostengünstig hergestellt werden. Bevorzugt ist der Abschirmkörper aus einem sogenannten Mu-Metall, einer Nickel-Eisen-Legierung, hergestellt. Alternativ ist der Abschirmkörper aus Stahl oder einem anderen magnetisch leitfähigen Material hergestellt.

Vorzugsweise ist der Abschirmkörper als eine zu der Antriebswelle koaxiale Ringscheibe mit einem radial außen an der Ringscheibe angeordneten, von der Ringscheibe hervorstehenden axialen Abschnitt ausgebildet. Die Ringscheibe weist bevorzugt eine zentrische bzw. koaxiale Öffnung auf, durch die sich die Antriebswelle und/oder eine Befestigungseinrichtung der Erregereinheit erstrecken kann. Vorzugsweise ist der Durchmesser dieser Öffnung nur geringfügig größer, als der der Antriebswelle. Der axiale Abschnitt kann insbesondere eine Umfangswand sein, die in Richtung der Sensoreinheit und/oder in Richtung des Gehäuses axial von der Ringscheibe hervorsteht. Dadurch kann der axiale Abschnitt insbesondere als ein Zylinderabschnitt ausgebildet sein, so dass eine sehr große umlaufende Fläche geschaffen ist. Der Abschirmkörper ist bevorzugt magnetisch leitfähig bzw. weist bevorzugt eine relativ hohe magnetische Permeabilität auf, so dass ein beispielsweise im Bereich der Öffnung der Ringscheibe erregtes Magnetfeld durch die Ringscheibe nach radial außen hin und durch den radial außen an der Ringscheibe angeordneten axialen Abschnitt weitergeleitet bzw. an ein benachbartes Bauteil effektiv übertragen werden kann. Folglich kann an dem axialen Abschnitt ein radial innen liegender Bereich ausgebildet sein, der besonders effektiv magnetisch isoliert werden kann, so dass dieser Bereich zur Anordnung und/oder Kopplung der Erregereinheit an der Antriebswelle besonders gut geeignet ist. Ferner ist ein relativ einfach zu montierender und platzsparender Aufbau des Drehwinkelmesssystems ermöglicht.

Vorzugsweise umgibt der axiale Abschnitt die Sensoreinheit und/oder die Erregereinheit zumindest teilweise radial. Wie zuvor erwähnt, kann in dem radial innen liegenden Bereich des axialen Abschnitts des Abschirmkörpers die Erregereinheit angeordnet sein. In einer vorteilhaften Ausgestaltung der Erfindung ist der axiale Abschnitt in axialer Richtung derart hoch bzw. lang ausgebildet, dass der axiale Abschnitt auch die Sensoreinheit zumindest teilweise radial umgibt. Dadurch kann eine besonders effektive Abschirmung des Drehwinkelmesssystems gegenüber magnetischen Störgrößen bewirkt werden.

Vorzugsweise umgibt das Antriebsmotor-Gehäuseteil einen Elektromotor. Ferner kann ein axialer Gehäusedeckel vorgesehen sein, der die Sensoreinheit, den Abschirmkörper und das freie Ende der Antriebswelle zumindest teilweise umgibt. Dadurch sind ein relativ einfacher Aufbau sowie eine relativ einfache Montage ermöglicht. Vorzugsweise umgibt zusätzlich das Antriebsmotor-Gehäuseteil den Abschirmkörper zumindest teilweise radial. Dadurch kann eine besonders effektive Abschirmung der Messeinheit bzw. des Drehwinkelmesssystems gegenüber Störgrößen erzielt werden, die außen an dem Drehwinkelmesssystem auftreten und das Drehwinkelmesssystem negativ beeinflussen könnten. Alternativ kann auch das Antriebsmotor-Gehäuseteil als ein separater zweiter Gehäusedeckel ausgebildet sein. Das Gehäuse ist bevorzugt aus Stahl hergestellt.

Vorzugsweise ist eine Fixiereinrichtung zur Fixierung des Mittels zur direkten Ausrichtung der Sensoreinheit gegenüber dem Antriebsmotor-Gehäuse vorgesehen. Die Fixiereinrichtung kann an dem Zentriermittel, an dem Antriebsmotor-Gehäuse und/oder an dem Abschirmkörper angeordnet sein. Die Fixiereinrichtung kann eine Rast-Verbindung oder eine Reibschluss-Verbindung sein. Beispielsweise ist an dem Zentrierkörper eine Raste angeordnet, die in eine an dem Antriebsmotor-Gehäuse und/oder an dem Abschirmkörper ausgebildete korrespondierende Aussparung in Eingriff bringbar ist. Alternativ oder zusätzlich kann an dem Zentrierkörper eine Reibfläche ausgebildet sein, die mit einer an dem Antriebsmotor-Gehäuse und/oder an dem Abschirmkörper ausgebildeten korrespondierenden Fläche in Eingriff bringbar ist, vergleichbar mit einer Presspassung. Dadurch kann eine besonders einfach zu montierende und effektive Ausrichtung der Sensoreinheit gegenüber dem Antriebsmotor-Gehäuseteil gewährleistet werden. Es sollte selbstverständlich sein, dass die Anordnung der einzelnen Komponenten der Fixiereinrichtung hinsichtlich des Zentrierkörpers, des Antriebsmotor-Gehäuses und/oder des Abschirmkörpers auch umgekehrt sein kann.

Nachfolgend wird die Erfindung anhand drei bevorzugter Ausführungsformen unter Bezugnahme auf die anliegenden Zeichnungen näher erläutert.
Figur 1a zeigt schematisch eine perspektivische Explosionsdarstellung einer ersten erfindungsgemäßen Ausführung einer Anordnung eines Drehwinkelmesssystems an einem Antriebsmotor-Gehäuseteil,
Figur 1b zeigt schematisch eine perspektivische Explosionsdarstellung einer zweiten erfindungsgemäßen Ausführung einer Anordnung eines Drehwinkelmesssystems an einem Antriebsmotor-Gehäuseteil, und
Figur 2 zeigt schematisch eine dritte erfindungsgemäße Ausführung einer Anordnung eines Drehwinkelmesssystems an einem Antriebsmotor-Gehäuseteil in einem Ausschnitt einer Explosions-Schnittdarstellung.

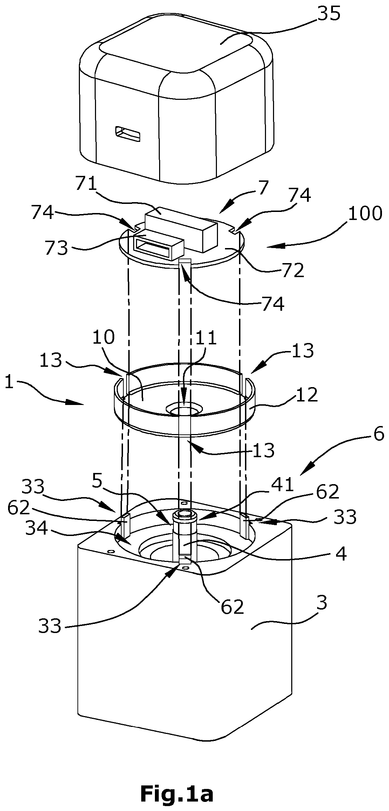

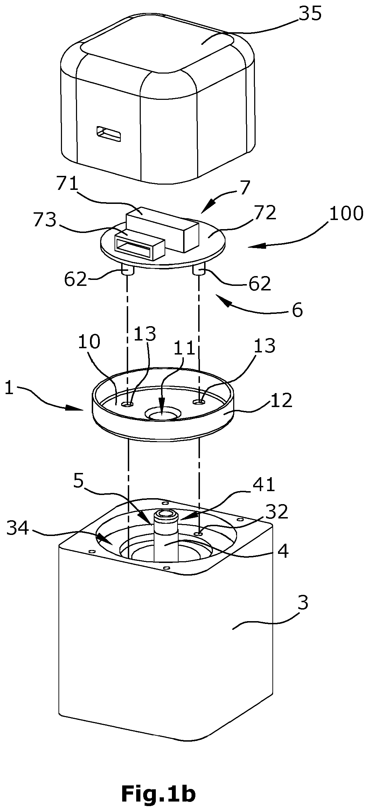

In den Figuren 1a und 1b ist jeweils ein Drehwinkelmesssystem 100 zum Anbau bzw. zur Kopplung an ein Antriebsmotor-Gehäuseteil 3 bzw. an eine Antriebswelle 4 gezeigt. Insbesondere ist das Drehwinkelmesssystem 100 unmittelbar an einem freien Ende 41 der Antriebswelle 4 angeordnet, so dass eine zusätzliche Welle zur Messerfassung nicht erforderlich ist.

Das Antriebsmotor-Gehäuseteil 3 ist vorliegend als ein Gehäusekasten für einen darin befindlichen, vorliegend nicht dargestellten Elektromotor ausgebildet. Ein solches Gehäuse 3 ist üblicherweise aus Aluminium hergestellt und daher nicht geeignet, durch äußere Magnetfelder, die beispielsweise durch eine Motorbremse hervorgerufen sind, magnetisiert zu werden. An einem ersten freien Ende des Gehäuseteils 3 ist zumindest ein Befestigungsflansch ausgebildet, an dem das Gehäuseteil 3 bzw. der sogenannte Motorflansch an einer Maschinebefestigt werden kann. An einem gegenüberliegenden freien Ende, an dem das Drehwinkelmesssystem 100 angeordnet ist, erstreckt sich die Antriebswelle 4 durch eine Öffnung des Gehäuseteils 3. Als Verschluss des Antriebsmotor-Gehäuseteils 3 ist ein Gehäusedeckel 35 vorgesehen, der an dem freien Ende 41 der Antriebswelle 4 angeordnet ist und das Drehwinkelmesssystem 100 zumindest teilweise umgibt.

Die Antriebswelle 4 ist üblicherweise eine aus Stahl hergestellte Vollwelle, die geeignet ist, zumindest teilweise magnetisiert zu werden. Insbesondere kann die Antriebswelle 4 im Betrieb durch den nicht dargestellten Elektromotor oder durch eine nicht dargestellte, mit der Antriebswelle 4 in Kontakt stehende magnetische Bremse magnetisiert werden. Um dadurch entstehende Messfehler, insbesondere bei dem Magnet-basierten Drehwinkelmesssystem 100, das in direktem Kontakt mit der Antriebswelle 4 stehen kann, zu verhindern, ist eine Abschirmung gegenüber störenden Magnetfeldern erforderlich.

Das Drehwinkelmesssystem 100 umfasst eine an der Antriebswelle 4 angeordnete Erregereinheit 5 und eine separate Sensoreinheit 7. Die Erregereinheit 5 kann einen nicht dargestellten Magnetträger mit zumindest einem darauf angeordneten, ebenfalls nicht dargestellten Permanentmagneten umfassen. Zusätzlich oder alternativ kann an der Antriebswelle 4 eine vorliegend nicht dargestellte optische Code-Scheibe zur optischen Erfassung angeordnet sein. Die Sensoreinheit 7 ist feststehend und umfasst insbesondere einen an einem Sensorträger 72 befestigten Sensor 71, beispielsweise einen Hall-, Wiegand- und/oder optischen Sensor. Der Sensor 71 ist zur Erfassung einer jeden Umdrehung der Antriebswelle 4 geeignet. Die Sensoreinheit 7 umfasst ferner eine Verarbeitungselektronik 73.

Um von der Sensoreinheit 7 ein störendes Magnetfeld abzuleiten, ist ein Abschirmkörper 1 vorgesehen, insbesondere ein magnetischer Abschirmkörper, der zwischen der Sensoreinheit 7 und dem Antriebsmotor-Gehäuseteil 3 angeordnet ist. Der Abschirmkörper 1 ist vorliegend als eine feststehende Komponente des Drehwinkelmesssystems 100 ausgebildet. Der Abschirmkörper 1 ist als eine Ringscheibe 10 mit einem radial außen an der Ringscheibe 10 umlaufenden axialen Abschnitt 12, insbesondere ein koaxialer Zylinderabschnitt, ausgebildet. Dadurch kann sowohl in axialer als auch in radialer Richtung eine magnetische Abschirmung bewirkt werden. Die Ringscheibe 10 des Abschirmkörpers 1 weist eine koaxiale Öffnung 11 auf, durch die sich die Antriebswelle 4 erstreckt. Dadurch kann zumindest teilweise eine direkte radiale Übertragung eines in der Antriebswelle 4 vorherrschenden Magnetfeldes in den Abschirmkörper 1 erfolgen. Zur Weiterleitung dieses Magnetfeldes von dem Abschirmkörper 1 ist radial außen der axiale Abschnitt 12 ausgebildet. Der axiale Abschnitt 12 erstreckt sich ausgehend von der Ringscheibe 10 axial einseitig in Richtung hin zu Sensoreinheit 7. Der Abschirmkörper 1 ist aus einem magnetisch leitfähigen Material hergestellt, beispielsweise aus Eisen oder Stahl. Dadurch kann ein in der Antriebswelle 4 und/oder dem Gehäuse 3 konzentriertes Magnetfeld von dem Drehwinkelmesssystem 100 nach außen hin abgeleitet werden.

Zur Ausrichtung der Sensoreinheit 7 gegenüber dem Antriebsmotor-Gehäuseteil 3 sind Mittel 6 vorgesehen, die ein direktes, exaktes und relativ einfach zu montierendes Ausrichten der Sensoreinheit 7 gegenüber dem Antriebsmotor-Gehäuseteil 3 ermöglichen.

Die Mittel 6 sind bei der Ausführung gemäß der Figur 1a als drei Zentrierstifte 62 ausgebildet, die in Form von rechteckigen Vorsprüngen 33 an dem Antriebsmotor-Gehäuseteil angeordnet sind. Die Zentrierstifte 62 sind insbesondere in Umfangsrichtung regelmäßig angeordnet, das heißt in einem Winkel zueinander von 120 Grad, und stehen axial von dem Antriebsmotor-Gehäuseteil 3 in Richtung der Sensoreinheit 7 hervor. Im montierten Zustand des Drehwinkelmesssystems 100 erstrecken sich die Zentrierstifte 62 von dem Gehäuseteil 3 durch den Abschirmkörper 1 bis in die Sensoreinheit 7. Dazu sind an dem Sensorträger 72 drei mit den Vorsprüngen 33 korrespondierende Aufnahmen 74 ausgebildet, mit denen die Vorsprünge 33 zur exakten Ausrichtung der Sensoreinheit 7 gegenüber dem Gehäuseteil 3 jeweils in Eingriff stehen. Die Aufnahmen 74 ermöglichen jeweils einen passgenauen Sitz eines freien Endes der Vorsprünge in der Aufnahme 74. Ferner ist eine Verdrehsicherheit des Sensorträgers 72 gegenüber dem Gehäuse 3 ermöglicht. Alternativ können die Aufnahmen 74 in Umfangsrichtung nicht nur abschnittsweise sondern umlaufend ausgebildet sein, so dass an dem Sensorträger 72 ein Absatz ausgebildet ist, an dem die Vorsprünge 33 anliegen. In einer solchen Ausgestaltung kann der Sensorträger 72 in Umfangsrichtung beliebig auf das Gehäuseteil 3 bzw. den Abschirmkörper 1 aufgesetzt werden.

Wie in Figur 1a gezeigt, erstreckt sich jeder Vorsprung 33 von dem Gehäuseteil 3 vorteilhafterweise berührungsfrei durch eine in dem Abschirmkörper 1 radial außen angeordnete Aussparung bzw. Ausnehmung 13. Die Aussparungen 13 sind insbesondere in Umfangsrichtung jeweils größer als die Vorsprünge 33 ausgebildet, so dass die Vorsprünge 33 jeweils berührungsfrei durch die Aussparung 13 geführt werden können. Dadurch kann eine direkte und exakte Ausrichtung der Sensoreinheit 7 gegenüber dem Gehäuseteil 3 ermöglicht werden, insbesondere ohne dass eine Abhängigkeit der Ausrichtung des Abschirmkörpers 1 hinzutritt.

Die Vorsprünge 33, die Aussparungen 13 und die Aufnahmen 74 sind umfangseitig in einem definierten Winkelverhältnis zueinander angeordnet, nämlich wie oben bereits erwähnt in einem Winkel zueinander von ca. 120 Grad. Dadurch kann der Sensorträger 72 und der Abschirmkörper 1 in einer definierten Position in eine Aussparung 34 des Gehäuseteils 3 auf die Vorsprünge 33 aufgesetzt und gegen ein Verdrehen gesichert werden. Hieraus resultierend kann eine besonders hohe Messgenauigkeit gewährleistet werden.

In der Figur 1b ist die Anordnung - zumindest bis auf die Mittel 6 - nahezu identisch zu der Ausgestaltung, die in Figur 1a gezeigt ist. Die Mittel 6 sind bei der Ausführung gemäß der Figur 1b als zwei Zentrierstifte 62 ausgebildet, die an dem Sensorträger 72 ausgebildet sind und von dem Sensorträger 72 in Richtung des Antriebsmotor-Gehäuseteils axial hervorstehen. Die Zentrierstifte 62 sind vorliegend an dem Sensorträger 72 in einem bestimmten Winkel zueinander angeordnet, so dass der Sensorträger 72 in nur einer vorgegebenen rotatorischen Ausrichtung auf das Gehäuseteil 3 bzw. den Abschirmkörper 1 aufgesetzt werden kann. Im montierten Zustand des Drehwinkelmesssystems 100 erstrecken sich die Zentrierstifte 62 von dem Sensorträger 72 durch den Abschirmkörper 1 bis in das Gehäuse 3. Dazu sind an dem Gehäuse 3 zwei mit den Zentrierstiften 62 korrespondierende Aufnahmen 32 ausgebildet, mit denen die Zentrierstifte 62 zur exakten Ausrichtung der Sensoreinheit 7 gegenüber dem Gehäuseteil 3 jeweils in Eingriff stehen. Die Aufnahmen 32 ermöglichen jeweils einen passgenauen Sitz eines freien Endes der Zentrierstifte 62.

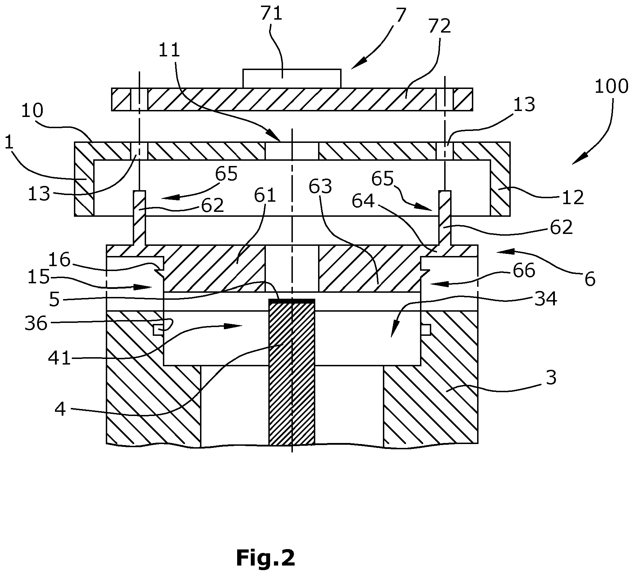

In der Figur 2 ist eine dritte erfindungsgemäße Ausführung gezeigt, wobei hier nur ein Ausschnitt des Drehwinkelmesssystems 100 dargestellt ist. Insbesondere ist in der Figur 2 nur der axiale Endbereich des Antriebsmotor-Gehäuseteils 3 gezeigt, in dem die Mittel 6, der Abschirmkörper 1 und die Sensoreinheit 7 angeordnet sind.

Die Mittel 6 weisen in dieser Ausführung einen flächigen Zentrierkörper 61 auf, der sich zumindest teilweise axial von der Sensoreinheit 7 bis in das Antriebsmotor-Gehäuseteil 3 erstreckt. Der Zentrierkörper 61 ist als ein separates Bauteil ausgebildet und axial zwischen dem Abschirmkörper 1 und dem Antriebsmotor-Gehäuse 3 angeordnet. Somit kann der Zentrierkörper 61 unabhängig von zumindest einem Teil der Komponenten 1, 3, 4 des Drehwinkelmesssystems 100 hergestellt und montiert werden. Insbesondere ist der Zentrierkörper 61 aus Kunststoff hergestellt. Der Zentrierkörper 61 weist eine zu der Antriebswelle 4 koaxiale Ringscheibe 64 auf, die in Richtung des Abschirmkörpers 3 eine axial hervorstehende erste Erhöhung 65 und in Richtung des Antriebsmotor-Gehäuses 3 zwei exzentrisch angeordnete, axial hervorstehende zweite Erhöhungen 66 aufweist.

Die erste Erhöhung 65 ist in Form von zwei axial hervorstehenden Zentrierstiften 62 ausgebildet. Die Zentrierstifte 62 erstrecken sich im montierten Zustand jeweils durch eine an dem Abschirmkörper 1 ausgebildete Ausnehmung 13 bis in eine korrespondierende Ausnehmung in der Sensoreinheit 7, insbesondere in dem Sensorträger 72. Dadurch kann eine direkte Ausrichtung bzw. Justierung der Sensoreinheit 7 gegenüber dem Zentrierkörper 61 erfolgen, insbesondere, ohne dass eine zusätzliche Passgenauigkeit gegenüber dem Abschirmkörper 1 erforderlich ist.

Die zweite Erhöhung 66 ist insbesondere als ein runder massiver Zentrierblock 63 ausgebildet. Der Zentrierblock 63 weist einen Außendurchmesser auf, der nur geringfügig geringer ist, als eine in dem Antriebsmotor-Gehäuseteil 3 ausgebildete Aussparung 34, in die der Zentrierblock 63 in Art einer Presspassung eingesetzt wird. Dadurch kann eine besonders stabile Fixierung des Zentrierblocks 63 gegenüber dem Antriebsmotor-Gehäuseteil 3 erreicht werden.

Zwischen dem Zentrierkörper 61, insbesondere dem Zentrierblock 63, und dem Antriebsmotor-Gehäuseteil 3 ist eine Fixiereinrichtung 15 ausgebildet. Dazu sind vorliegend an einer radialen Außenwand des Zentrierblocks 63 vier über den Umfang gleichmäßig verteilte, elastische Clips oder Rastnasen 16 ausgebildet. Die Rastnasen 16 können jeweils mit einer an dem Antriebsmotor-Gehäuseteil 3 korrespondierenden Ausnehmung 36 in Eingriff gebracht werden, insbesondere in diese eingreifen. Dadurch kann der Zentrierblock 63 bzw. der Zentrierkörper 61 gegenüber dem Antriebsmotor-Gehäuseteil 3 in relativ einfacher Weise axial fixiert werden.

Zur Montage des Drehwinkelmesssystems 100 gemäß der Figur 2 ist vorgesehen, dass zunächst der Zentrierkörper 61 auf den Abschirmkörper 1 ausgerichtet, aufgesteckt und aufgeklebt wird. Sodann wird die Sensoreinheit 7 auf die sich durch den Abschirmkörper 1 erstreckenden und von dem Abschirmkörper 1 axial hervorstehenden Zentrierstifte 62 aufgesetzt und mit dem Abschirmkörper 1 verklebt. Das Paket aus Sensoreinheit 7, Abschirmkörper 1 und Zentrierkörper 61 wird anschließend auf das Gehäuseteils 3 ausgesetzt und an diesem mittels der Fixiereinrichtung 15 fixiert.

Es sollte deutlich sein, dass in den gezeigten Beispielen zumindest die Antriebswelle 4, der Abschirmkörper 1, der zweite Abschirmkörper 2, der Sensorträger 72 und das Gehäuseteil 3 eine gemeinsame Längsachse aufweisen. Es besteht somit die Möglichkeit, eine hochauflösende magnetische (Multiturn-)Sensoreinheit 7 mit Magnetfeldabschirmung platzsparend in ein Motorgehäuse zu integrieren.

### Bezugszeichen

- 100: Drehwinkelmesssystem

- 1: Abschirmkörper
- 10: Ringscheibe
- 11: koaxiale Öffnung
- 12: axialer Abschnitt
- 13: Ausnehmung, Bohrung
- 15: Fixiereinrichtung
- 16: Raste, Clip, Riefen

- 3: Antriebsmotor-Gehäuseteil
- 32: Zentrierstiftaufnahme
- 33: Vorsprung
- 34: Aussparung
- 35: Gehäusedeckel
- 36: Aussparung

- 4: Antriebswelle
- 41: freies Ende

- 5: Erregereinheit

- 6: Mittel
- 61: Zentrierkörper
- 62: Zentrierstift
- 63: Zentrierring, Zentrierblock
- 64: Ringscheibe
- 65: erste Erhöhung
- 66: zweite Erhöhung

- 7: Sensoreinheit
- 71: Sensor
- 72: Sensorträger
- 73: Elektronik
- 74: Aufnahme

## Patentansprüche

1. Anordnung eines Magnet-basierten Drehwinkelmesssystems (100) an einem Antriebsmotor-Gehäuseteil (3), mit
einem Antriebsmotor-Gehäuseteil (3),
einer mit einem freien Ende (41) aus dem Antriebsmotor-Gehäuseteil (3) heraus geführten Antriebswelle (4),
einer mit der Antriebswelle (4) an dem freien Ende (41) drehfest verbundenen Erregereinheit (5),
einer feststehenden Sensoreinheit (7), die zum Erfassen einer Drehbewegung der Antriebswelle (4) mit der Erregereinheit (5) funktional zusammenwirkt, und
einem axial zwischen der Sensoreinheit (7) und dem Antriebsmotor-Gehäuseteil (3) angeordneten Abschirmkörper (1),
**dadurch gekennzeichnet, dass**
Mittel (6) zur direkten Ausrichtung der Sensoreinheit (7) gegenüber
dem Antriebsmotor-Gehäuseteil (3) vorhanden sind, wobei sich die Mittel (6) vom Antriebsmotor-Gehäuseteil (3) bis zur Sensoreinheit (7) erstrecken, wobei der Abschirmkörper (1) zumindest eine Ausnehmung (13) aufweist, durch die sich die Mittel (6) in axialer Richtung erstrecken.

2. Anordnung nach Anspruch 1, **dadurch gekennzeichnet, dass** die Mittel (6) an der Sensoreinheit (7), an dem Antriebsmotor-Gehäuseteil (3) und/oder an dem Abschirmkörper (1) ausgebildet sind.

3. Anordnung nach einem der Ansprüche 1 oder 2, **dadurch gekennzeichnet, dass**
die Mittel (6) sich von der Sensoreinheit (7) in das Antriebsmotor-Gehäuseteil (3) erstrecken.

4. Anordnung nach einem der voranstehenden Ansprüche, **dadurch gekennzeichnet, dass**
die Mittel (6) zumindest einen Zentrierstift (62) aufweisen.

5. Anordnung nach einem der voranstehenden Ansprüche, **dadurch gekennzeichnet, dass**
die Mittel (6) zumindest einen flächigen Zentrierkörper (61) aufweisen.

6. Anordnung nach Anspruch 5, **dadurch gekennzeichnet, dass** der flächige Zentrierkörper (61) axial zwischen der Sensoreinheit (7) und dem Antriebsmotor-Gehäuseteil (3) angeordnet ist.

7. Anordnung nach einem der Ansprüche 5 oder 6, **dadurch gekennzeichnet, dass**
der flächige Zentrierkörper (61) als eine zu der Antriebswelle (4) koaxiale Ringscheibe (64) ausgebildet ist, die in Richtung der Sensoreinheit (7) zumindest eine axial hervorstehende erste Erhöhung (65) und/oder in Richtung des Antriebsmotor-Gehäuseteils (3) zumindest eine axial hervorstehende zweite Erhöhung (66) aufweist.

8. Anordnung nach Anspruch 7, **dadurch gekennzeichnet, dass** die Erhöhung (65, 66) als ein Zentrierstift (62), Zentrierring oder Zentrierblock (63) ausgebildet ist.

9. Anordnung nach einem der voranstehenden Ansprüche, **dadurch gekennzeichnet, dass**
der Abschirmkörper (1) feststehend ist.

10. Anordnung nach einem der voranstehenden Ansprüche, **dadurch gekennzeichnet, dass**
der Abschirmkörper (1) als eine zu der Antriebswelle (4) koaxiale Ringscheibe (10) mit einem radial außen an der Ringscheibe (10) axial hervorstehenden umlaufenden Abschnitt (12) ausgebildet ist.

11. Anordnung nach Anspruch 10, **dadurch gekennzeichnet, dass** der axiale Abschnitt (12) die Sensoreinheit (7) und/oder die Erregereinheit (5) zumindest teilweise radial umgibt.

12. Anordnung nach einem der voranstehenden Ansprüche, **dadurch gekennzeichnet, dass**
das Antriebsmotor-Gehäuseteil (3) einen Elektromotor umgibt und ein axialer Gehäusedeckel (35) vorgesehen ist, der die Sensoreinheit (7), den Abschirmkörper (1) und das freie Ende (41) der Antriebswelle (4) zumindest teilweise umgibt.

13. Anordnung nach einem der voranstehenden Ansprüche, **dadurch gekennzeichnet, dass**
eine Fixiereinrichtung (15) zur Fixierung der Mittel (6) vorgesehen ist, wobei die Fixiereinrichtung (15) an den Mitteln (6), der Sensoreinheit (7), dem Antriebsmotor-Gehäuseteil (3) und/oder an dem Abschirmkörper (1) angeordnet ist.

## Claims

1. Arrangement of a magnet-based rotational angle measuring system (100) on a drive motor housing part (3), comprising
a drive motor housing part (3),
a drive shaft (4) having a free end (41) extending out of the drive motor housing part (3),
an exciter unit (5) non-rotatably connected to the drive shaft (4) at the free end (41),
a static sensor unit (7) which functionally interacts with the exciter unit (5) in order to detect a rotary movement of the drive shaft (4), and
a shielding body (1) arranged axially between the sensor unit (7) and the drive motor housing part (3),
**characterized in that**
means (6) for direct alignment of the sensor unit (7) with respect to the drive motor housing part (3) are provided, the means (6) extending from the drive motor housing part (3) to the sensor unit (7),
wherein the shielding body (1) comprises at least one recess (13) through which the means (6) extend in an axial direction.

2. Arrangement of claim 1, **characterized in that** the means (6) are formed on the sensor unit (7), the drive motor housing part (3) and/or the shielding body (1).

3. Arrangement of one of claims 1 or 2, **characterized in that** the means (6) extend from the sensor unit (7) into the drive motor housing part (3).

4. Arrangement of one of the preceding claims, **characterized in that** the means (6) comprise at least one centering pin (62).

5. Arrangement of one of the preceding claims, **characterized in that** the means (6) comprise at least one planar centering body (61).

6. Arrangement of claim 5, **characterized in that** the planar centering body (61) is arranged axially between the sensor unit (7) and the drive motor housing part (3).

7. Arrangement of one of claims 5 or 6, **characterized in that** the planar centering body (61) is formed as an annular disc (64) coaxial to the drive shaft (4), the annular disc (64) comprising at least one first protrusion (65) axially projecting towards the sensor unit (7) and/or at least one second protrusion (66) axially projecting towards the drive motor housing part (3).

8. Arrangement of claim 7, **characterized in that** the protrusion (65, 66) is designed as a centering pin (62), a centering ring or a centering block (63).

9. Arrangement of one of the preceding claims, **characterized in that** the shielding body (1) is static.

10. Arrangement of one of the preceding claims, **characterized in that** the shielding body (1) is designed as an annular disc (10) coaxial to the drive shaft (4), the annular disc (10) comprising a circumferential section (12) projecting axially from the annular disc (10) on the radially outer side.

11. Arrangement of claim 10, **characterized in that** the axial section (12) radially surrounds the sensor unit (7) and/or the exciter unit (5) at least in part.

12. Arrangement of one of the preceding claims, **characterized in that** the drive motor housing part (3) surrounds an electric motor and an axial housing cover (35) is provided that at least partly surrounds the sensor unit (7), the shielding body (1) and the free end (41) of the drive shaft (4).

13. Arrangement of one of the preceding claims, **characterized in that** a fixing arrangement (15) is provided for fixing the means (6), wherein the fixing arrangement (15) is arranged at the means (6), the sensor unit (7), the drive motor housing part (3) and/or the shielding body (1).

## Revendications

1. Agencement d'un système de mesure d'angle de rotation à base d'aimants (100) sur une partie de carter de moteur d'entrainement (3), comportant
une partie de carter de moteur d'entrainement (3),
un arbre d'entrainement (4) guidé hors de la partie de carter de moteur d'entrainement (3) par une extrémité libre (41),
une unité d'excitation (5) reliée de manière fixe en rotation à l'arbre d'entrainement (4) à l'extrémité libre (41),
une unité de capteur (7) stationnaire coopérant fonctionnellement avec l'unité d'excitation (5) pour détecter un mouvement de rotation de l'arbre d'entrainement (4), et
un corps de blindage (1) est disposé axialement entre l'unité de capteur (7) et la partie de carter de moteur d'entrainement (3),
**caractérisé en ce que**
des moyens (6) sont prévus pour l'alignement direct de l'unité de capteur (7) par rapport à la partie de carter de moteur d'entrainement (3), lesdits moyens s'étendant de la partie de carter de moteur d'entrainement (3) jusqu'à l'unité de capteur (7).
ledit corps de blindage (1) présentant au moins un évidement (13) à travers lequel s'étendent dans la direction axiale.

2. Agencement selon la revendication 1, **caractérisé en ce que** les moyens (6) sont formés sur l'unité de détection (7), la partie de carter de moteur d'entrainement (3) et/ou le corps de blindage (1).

3. Agencement selon l'une des revendications 1 ou 2, **caractérisé en ce que** les moyens (6) s'étendent de l'unité de capteur (7) dans la partie de carter de moteur d'entrainement (3).

4. Agencement selon l'une quelconque des revendications précédentes, **caractérisé en ce que** les moyens (6) comportent au moins une pointe de centrage (62).

5. Agencement selon l'une quelconque des revendications précédentes, **caractérisé en ce que** les moyens (6) comportent au moins un corps de centrage (61) plat.

6. Agencement selon la revendication 5, **caractérisé en ce que** le corps de centrage (61) plat est disposé axialement entre l'unité de capteur (7) et la partie de carter de moteur d'entrainement (3).

7. Agencement selon l'une des revendications 5 ou 6, **caractérisé en ce que** le corps de centrage (61) plat est réalisé comme un disque (64) annulaire coaxial à l'arbre d'entrainement (4) et présent au moins une première saillie (65) faisant saillie axialement en direction de l'unité de détection (7) et/ou une deuxième saillie (66) faisant saillie axiale en direction de la partie de carter de moteur d'entrainement (3).

8. Agencement selon la revendication 7, **caractérisé en ce que** la saillie (65, 66) est réalisée comme une pointe de centrage (62), une bague de centrage ou un bloc de centrage (63).

9. Agencement selon l'une quelconque des revendications précédentes, **caractérisé en ce que** le corps de blindage (1) est stationnaire.

10. Agencement selon l'une quelconque des revendications précédentes, **caractérisé en ce que** le corps de blindage (1) est réalisé sous forme d'un disque (10) annulaire coaxial à l'arbre d'entrainement (4) avec une section circonférentielle (12) faisant saillie axialement sur l'extérieur radial du disque (10) annulaire.

11. Agencement selon la revendication 10, **caractérisé en ce que** la section axiale (12) entoure au moins partiellement radialement l'unité de détection (7) et/ou l'unité d'excitation (5).

12. Agencement selon l'une quelconque des revendications précédentes, **caractérisé en ce que** la partie de carter de moteur d'entrainement (3) entoure un moteur électrique et un couvercle de carter (35) axial est prévu entourant au moins partiellement l'unité de capteur (7), le corps de blindage (1) et l'extrémité libre (41) de l'arbre d'entrainement (4).

13. Agencement selon l'une quelconque des revendications précédentes, **caractérisé en ce qu'**un dispositif de fixation (15) est prévu pour fixer les moyens (6), le dispositif de fixation (15) étant disposé sur les moyens (6), l'unité de détection (7), la partie de carter de moteur d'entrainement (3) et/ ou le corps de blindage (1).
